# EUROPEAN PATENT SPECIFICATION

(11) **EP 3 063 483 B1**
(45) Date of publication and mention of the grant of the patent: **11.04.2018**
(21) Application number: 13788935.8
(22) Date of filing: 01.11.2013
(51) Int. Cl.: F25D 23/02, B29C 44/12

(54) **REFRIGERATOR DOOR AND METHOD OF MANUFACTURING THE SAME**
KÜHLSCHRANKTÜR UND VERFAHREN ZUR HERSTELLUNG DAVON
PORTE DE RÉFRIGÉRATEUR ET SON PROCÉDÉ DE FABRICATION

(43) Date of publication of application: 07.09.2016
(73) Proprietor: Arçelik Anonim Sirketi, 34950 Istanbul (TR)
(72) Inventor: OZYUKSEL, Faik Emre, 34950 Istanbul (TR); DEMIRAY, Fatih, 34950 Istanbul (TR); BOLAT, Niyazi, 34950 Istanbul (TR); SENTURK, Turker, 34950 Istanbul (TR); MOZA, Ahmet Onur, 34950 Istanbul (TR)
(86) International application number: PCT/EP2013/072853
(87) International publication number: WO 2015/062665

(56) References cited:
- WO-A1-84/03659
- WO-A1-2011/081279
- US-A- 3 882 637
- US-A1- 2004 245 666

## Description

The present invention relates to a refrigerator door for use in a refrigeration appliance such as a domestic refrigerator. The present invention particularly relates to a method of manufacturing a refrigerator door.

A door of a domestic refrigerator has several functions. Most importantly, it enables access into one or more than one refrigeration compartment of the refrigerator wherein the items to be cooled are stored. Therefore, it is generally desired that a refrigerator door hermetically seals and thermally insulates an interior of the refrigeration compartment from an outer environment. To attain the necessary thermal insulation, the refrigerator door is typically provided with insulating material. To attain the necessary hermetic sealing, a gasket is usually fastened to a periphery of the refrigerator door. Thus, a refrigerator door with adequate hermetic sealing and thermal insulation improves the energy efficiency of the refrigerator.

The above-mentioned functions of the door of a domestic refrigerator are not exhaustive. For instance, it is customary to make use of an inner side of the refrigerator door for storing items to be cooled. Therefore, an inner side of the refrigerator door is typically provided with mounting lugs for attaching storage bins. Thereby, the utilizable storage space of the refrigerator is effectively increased. The refrigerator door must also be provided with a grip for opening/closing.

The appearance of the refrigerator is also of high relevance for a customer's perceptions. Therefore, a front side of the refrigerator door is usually covered with decorative material which appeals to the customer. In addition, the front side of the refrigerator door is frequently furnished with a logo of the manufacturer.

Hence, as briefly outlined above, a refrigerator door must fulfill several requirements. Therefore, the manufacturing process of a refrigerator door can easily become a complicated task which involves several process steps in which a large number of components are produced and assembled together. In general, a manufacturing process of a refrigerator door is a labor- and a cost-intensive process.

CON 2369175 (Y) discloses a refrigerator door which has a door casing and a door lining. The door casing is made of metal. The door casing and the door lining are fixed to each other by screws. An insulating material is provided between the door casing and the door lining. In addition, a gasket is clamped between the door casing and the door lining.

United States Patent Application US 2004/0245666 A1 discloses a manufacturing method for a refrigerator door in which an appearance pattern is painted or printed onto the inner surface a transparent plastic layer. A male mold of a vacuum forming machine next provides a shape of the transparent plastic layer with an upstanding outer rim. A PU foaming material is then poured into the inner surface of the formed plastic layer, and thereafter a door lining is used to cover the PU foaming material.

An objective of the present invention is to provide a method of manufacturing a refrigerator door which overcomes the aforementioned problems of the prior art and which simplifies the production and assembly process of a refrigerator door and enables reduction of waste and errors. This objective has been achieved by the method of manufacturing a refrigerator door according to the present invention as defined in claim 1, and the refrigerator according to the present invention as defined in claim 15. Further achievements have been attained by the subject-matters respectively defined in the dependent claims.

The method of manufacturing the refrigerator door according to the present invention comprises a step of providing a door body which has an upper section, a lower section, a left lateral section, a right lateral section, and a body section. Each of the upper section, the lower section, the left lateral section, and the right lateral section has an outer flange portion which projects vertically away from an inner side of the door body so as to enclose a space for retaining foam material. The method of manufacturing the refrigerator door according to the present invention further comprises the steps of providing a door lining, pouring foam material into an inner side of the door body and pressing the door lining onto the curing foam material to assemble the door lining with the door body.

In the present invention, polyurethane is preferably used as the foam material. The liquid foam material which is poured into the inner side of the door body completely fills the gap enclosed by the door body and the door lining. The polyurethane filled between the door lining and the door body provides a relatively high thermal insulation and firmly joins the door lining and the door body together. The assembly process of door body and the door lining is completed when the polyurethane is totally cured. After completion of the curing process, the refrigerator door is ready for use in a refrigerator.

In a first embodiment, not part of the present invention, the above-defined sections including the flange portions are integrally formed as a monolithic door body. The monolithic door body is preferably made from durable plastic. Thereby, a scratch-proof and corrosion-free refrigerator door is attained. In this embodiment, the total number of parts to be assembled is reduced. Moreover, the liquid foam material poured into an inner side of the monolithic door body cannot leak to an outside. Therefore, a reduction in manufacturing waste/error is attained. Moreover, the manufacturing process is rendered simple and reliable.

In a second embodiment, part of the present invention, the above-defined peripheral sections i.e., all the sections except for the body section are integrally formed as a monolithic door frame which has an aperture. In this embodiment, the body section is separately formed as a monolithic cover. The monolithic cover and the monolithic door frame are assembled with each other to constitute the door body by placing the monolithic cover onto an inner side of the monolithic door frame to close the aperture. The monolithic door frame and the monolithic cover are preferably made from durable plastic. The monolithic cover may be alternatively produced by any suitable decorative material. The liquid foam material is poured onto a rear side of the monolithic cover and into an inner side of the monolithic door frame. The liquid foam material poured onto a rear side of the monolithic cover and into an inner side of the monolithic door frame cannot leak to an outside. Therefore, the aforementioned advantages are also attained for the second embodiment. In addition, post-processing steps for attaching decorative materials/logos to the door body are dispensed with.

In a third embodiment, also part of the present invention, the above-defined peripheral sections i.e., all the sections except for the body section are separately formed to assemble a modular door frame which has an aperture. In this embodiment, the peripheral sections are each provided with an engagement portion for enabling a form-fitting assembly of the modular door frame. In this embodiment, the body section is separately formed as a monolithic cover. The modular door frame and the monolithic cover are preferably made from durable plastic. The monolithic cover may be alternatively produced from any suitable decorative material. The peripheral sections are assembled with each other to constitute the modular door frame. The modular door frame and the monolithic cover are assembled with each other to constitute the door body by placing the monolithic cover onto an inner side of the modular door frame to close the aperture. The liquid foam material is poured onto a rear side of the monolithic cover and into an inner side of the modular door frame. The liquid foam material poured onto a rear side of the monolithic cover and into an inner side of the modular door frame cannot leak to an outside. Consequently, a manufacturing waste/error is reduced. In this embodiment, the height of the modular door frame can be varied by using lateral sections which have a smaller or greater length. In this embodiment, the upper/lower sections are rendered compatible with refrigerator doors of different heights. Thereby, a manufacturing process of the refrigerator door is further simplified.

In respective versions of the second and the third embodiments, the monolithic cover is provided in form of a decorative panel. This obviates any post processing steps of attaching decorative materials and/or logos onto the door body. The decorative panel of the present invention is preferably made from durable plastic, glass, mirror, paper, poster, ply wood or the like. The decorative panel is preferably provided with a pattern and/or a texture.

By the method according to the present invention the number of process steps required to complete manufacturing and assembling of a refrigerator door is reduced. In addition, the manufacturing waste/error due to polyurethane leakage is also reduced. By the method according to the present invention, refrigerator doors having different sizes and appearances can be cost-effectively manufactured. In addition, post processing steps for attaching decorative materials/logos to the door body become superfluous. Hence, the method of the present invention simplifies manufacturing and assembly of a refrigerator door.

Additional advantages of the manufacturing method according to the present invention and the refrigerator according to the present invention will become apparent with the detailed description of the embodiments with reference to the accompanying drawings in which:
Figure 1 - is a schematic perspective view of three refrigerators each having a refrigerator door according to a different embodiment of the present invention.
Figure 2 - is another schematic perspective view of the three refrigerators as shown in Fig. 1.
Figure 3 - is a schematic perspective view of a refrigerator door according to a first embodiment, not part of the present invention.
Figure 4 - is a schematic perspective exploded view of the refrigerator door shown in Fig. 3, prior to assembling a monolithic door body and a door lining by using a foam material.
Figure 5 - is a schematic perspective view of a refrigerator door according to a second embodiment, part of the present invention.
Figure 6 - is a schematic perspective exploded view of the refrigerator door shown in Fig. 5, prior to assembling a monolithic door frame, a monolithic cover, and a door lining by using a foam material.
Figure 7 - is another schematic perspective exploded view of the refrigerator door shown in Fig. 5, prior to assembling the monolithic door frame, the monolithic cover, and the door lining by using the foam material.
Figure 8 - is a schematic perspective exploded partial view of the refrigerator door shown in Fig. 5, prior to assembling the monolithic door frame and the monolithic cover.
Figure 9 - is a schematic perspective view of a refrigerator door according to a third embodiment, also part of the present invention.
Figure 10 - is a schematic perspective exploded view of the refrigerator door shown in Fig. 9, prior to assembling a modular door frame, a monolithic cover, and a door lining by using a foam material.
Figure 11 - is another schematic perspective exploded view of the refrigerator door shown in Fig. 9, prior to assembling the modular door frame, the monolithic cover, and the door lining by using the foam material.
Figure 12 - is a schematic perspective exploded partial view of the refrigerator door shown in Fig. 9, prior to assembling the modular door frame and the monolithic cover.

The reference signs appearing on the drawings relate to the following technical features.
1. Refrigerator door
2. Door body
3a. Upper section
3b. Lower section
3c. Left lateral section
3d. Right lateral section
3e. Body section
3f. Outer Flange portion
3g. Engagement portion
4. Door lining
5. Door frame
6. Aperture
7. Cover
8. Through hole
9. Protrusion
10. Depression
11. Recess portion
12. Flange
13. Refrigerator

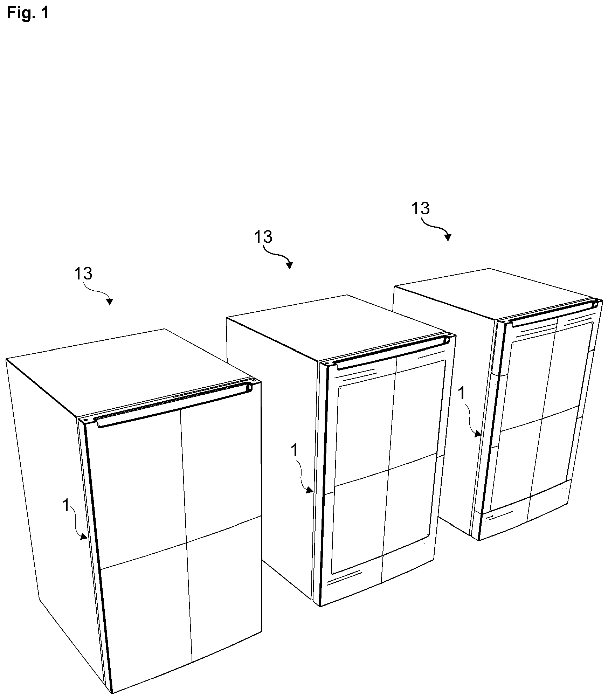

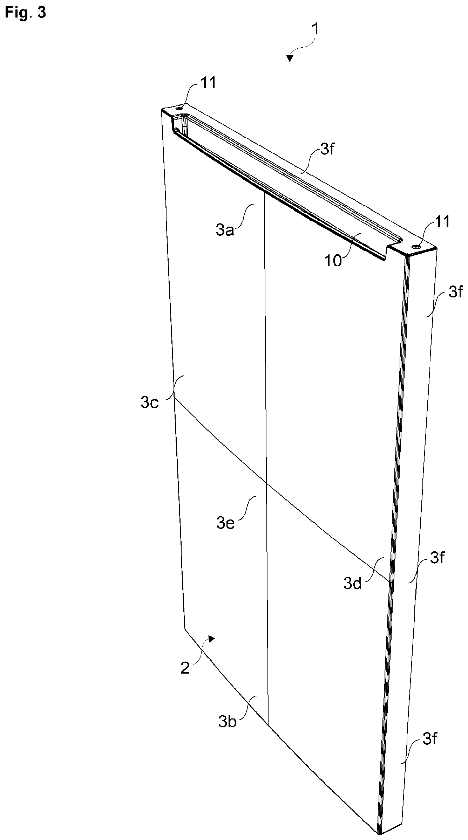

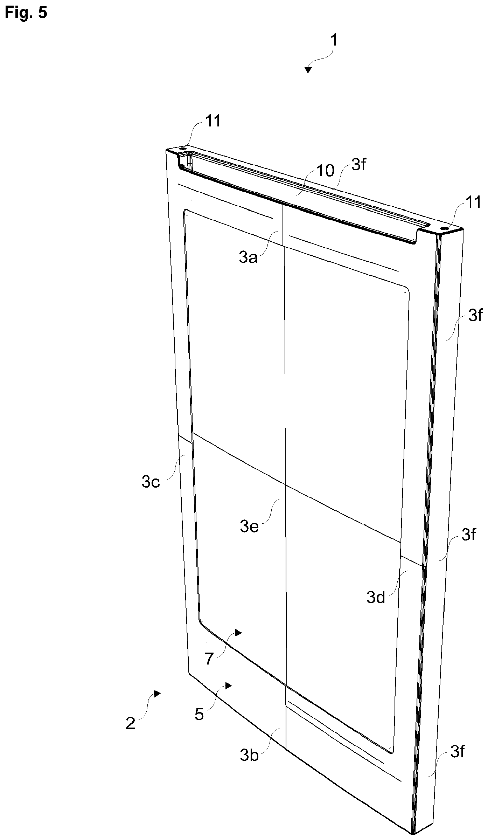

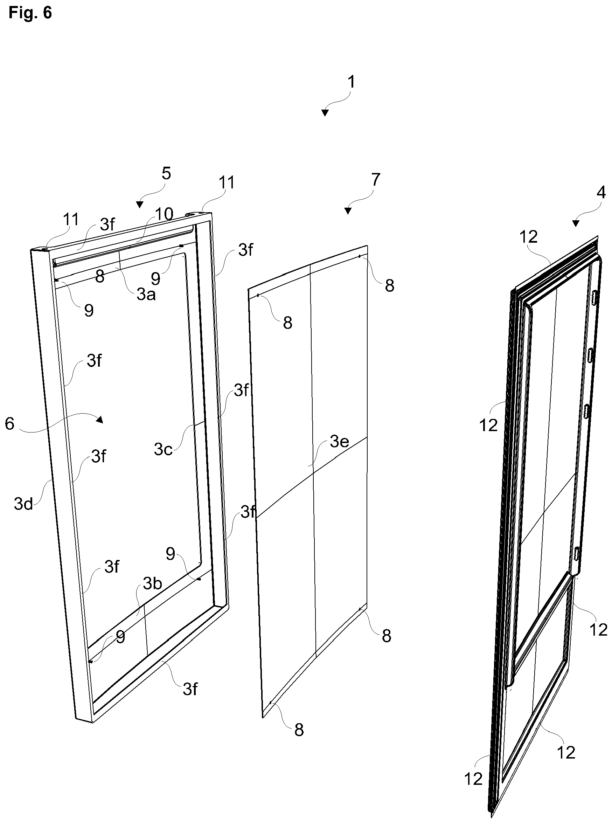

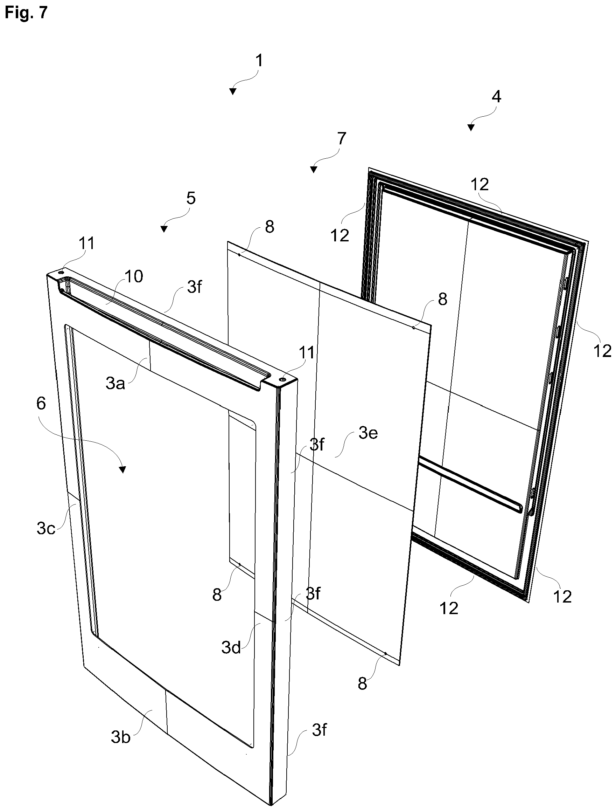

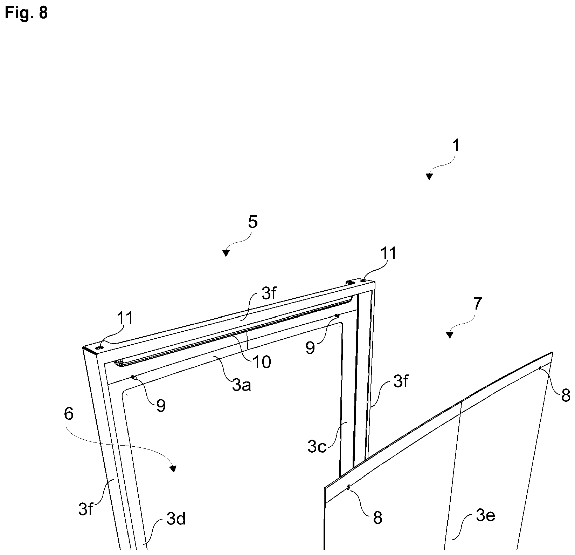

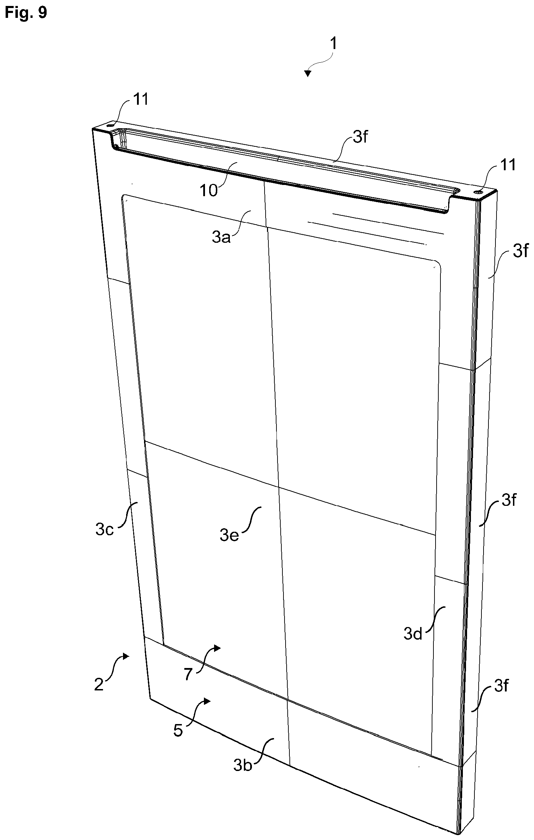

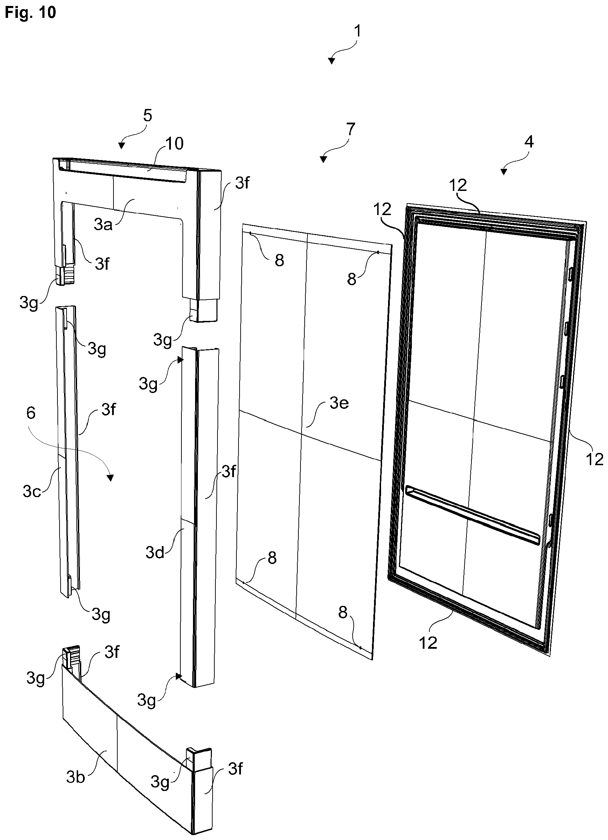

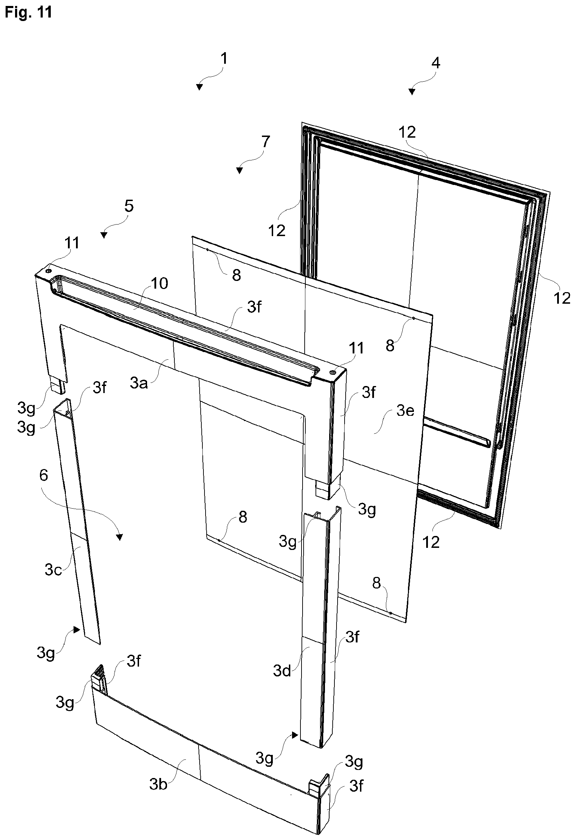

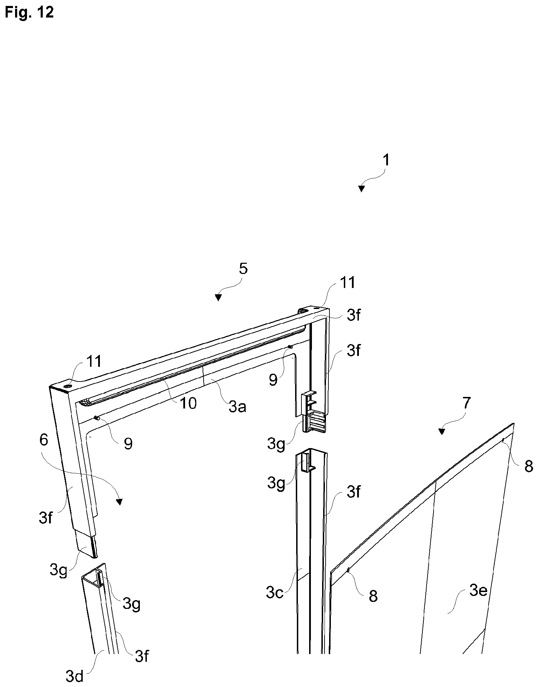

The method of manufacturing the refrigerator door (1) according to the present invention comprises: a step of providing a door body (2) which has an upper section (3a), a lower section (3b), a left lateral section (3c), a right lateral section (3d), and a body section (3e) (Figs. 1 to 12). Each of the upper section (3a), the lower section (3b), the left lateral section (3c), and the right lateral section (3d) has an outer flange portion (3f). The outer flange portions (3f) project vertically away from an inner side of the door body (2) so as to enclose a space for retaining foam material (not shown). The method of manufacturing the refrigerator door (1) according to the present invention further comprises: a step of providing a door lining (4), a step of pouring foam material into an inner side of the door body (2) and a step of pressing the door lining (4) onto the curing foam material to assemble the door lining (4) with the door body (2).

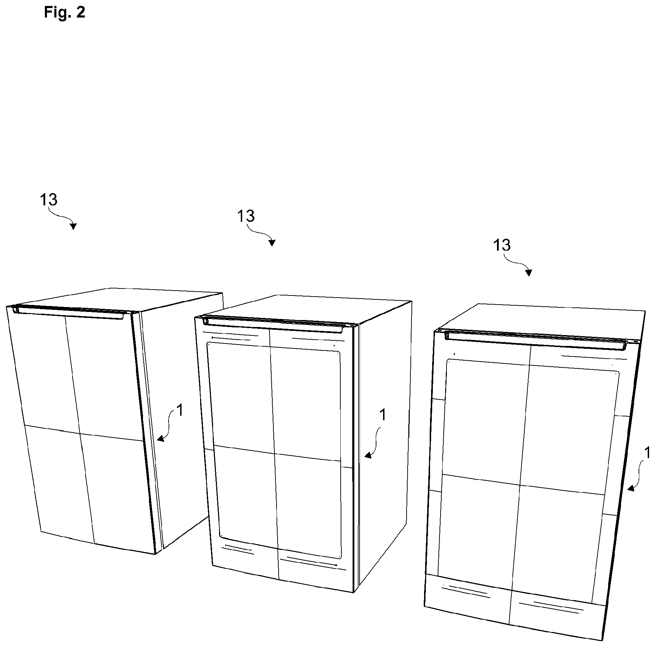

In the present invention, polyurethane (PU) is preferably used as the foam material. After the liquid foam material is poured into the inner side of the door body (2), it completely fills the space enclosed by the door body (2) and the door lining (4). Therefore, the polyurethane filling (not shown) formed between the door lining (4) and the door body (2) provides relatively high thermal insulation and also firmly joins the door lining (4) and the door body (2) together. The assembly process of the door body (2) and the door lining (4) is completed when the foam is totally cured. Thus, after completion of the curing process of the foam material, the refrigerator door (1) is ready for use in the refrigerator (13) (Figs. 1 and 2).

In a first embodiment, the upper section (3a), the lower section (3b), the left lateral section (3c), the right lateral section (3d), the body section (3e), and the outer flange portions (3f) are integrally formed as a monolithic door body (2) (Figs. 1 to 4). In this embodiment, the inner side of the door body (2) is void of any openings, slits and the like by virtue of its monolithic form. Therefore, the liquid foam material poured into an inner side of the monolithic door body (2) cannot leak to an outside. Consequently, a waste of foam material and/or a manufacturing error is prevented.

In a version of the first embodiment, the monolithic door body (2) is made from plastic. Thereby, the monolithic door body (2) is rendered corrosion-free. Thus, the monolithic door body (2) need not be painted. In addition, the monolithic door body (2) is formed from a relatively durable plastic. Thereby, the monolithic door body (2) is rendered less vulnerable to outer influences such as scratches. In another version of the first embodiment, the monolithic door body (2) is formed from transparent plastic. In an alternative version of the first embodiment, the door body (2) is formed from colored plastic. In another version of the first embodiment, a logo is engraved and/or embossed on the monolithic door body (2). Thereby, the manufacturing costs can be further reduced. In another version of the first embodiment, a decorative panel is attached to an outer surface of the monolithic door body (2). In this version of the first embodiment, the decorative panel is made from any suitable material. The decorative panel preferably has a pattern, texture and the like which appeals the customer. In another version of the first embodiment, the decorative panel is a glass plate. In an alternative version of the first embodiment, the decorative panel is a mirror. In another version of the first embodiment, the shape of the monolithic door body (2) is substantially rectangular. In this version of the first embodiment, the front side of the door body (2) is slightly curved. In an alternative version of the first embodiment, the front side of the monolithic the door body (2) is substantially flat.

In a second embodiment, the upper section (3a), the lower section (3b), the left lateral section (3c), the right lateral section (3d), and the outer flange portions (3f) are integrally formed as a monolithic door frame (5) which has an aperture (6) (Figs. 1 and 2, Figs. 5 to 8). In this embodiment, the body section (3e) is separately formed as a cover (7). The cover (7) is preferably formed as a monolithic cover (7). The monolithic door frame (5) and the cover (7) are assembled with each other to constitute the door body (2) by placing the cover (7) onto an inner side of the door frame (5) to close the aperture (6). The liquid foam material is poured onto a rear side of the cover (7) and into an inner side of the monolithic door frame (5). In this embodiment, the inner side of monolithic door frame (5) and the cover (7) constitutes a structure which is void of any openings, slits and the like. Therefore, the liquid foam material poured onto a rear side of the cover (7) and into an inner side of the monolithic door frame (5) cannot leak to an outside. Consequently, a waste of foam material and/or a manufacturing error is prevented.

In a version of the second embodiment, the monolithic cover (7) is provided in form of a decorative panel. In this version of the second embodiment, the decorative panel is made of any suitable decorative material. The decorative panel preferably has a pattern, texture and the like which appeals the customer. In a version of the second embodiment, the decorative panel is configured by paper, a poster, a glass plate, a mirror plate, wood, or plastic. The foam material cured behind the decorative material strengthens the overall structure. In another version of the second embodiment, the front side of the monolithic cover (7) is slightly curved. In an alternative version of the second embodiment, the front side of monolithic cover (7) is substantially flat. In another version of the second embodiment, the monolithic door frame (5) is made from plastic. Thereby, the monolithic door frame (5) is rendered corrosion-free. Thus, the monolithic door frame (5) need not be painted. In addition, the monolithic door frame (5) is formed from a relatively durable plastic. Thereby, the monolithic door frame (5) is rendered less vulnerable to outer influences such as scratches. In another version of the second embodiment, the monolithic door frame (5) is formed from transparent plastic. In an alternative version of the second embodiment, the monolithic door frame (5) is formed from colored plastic. In another version of the second embodiment, a logo is engraved and/or embossed on the monolithic door frame (5). In an alternative version of the second embodiment, the logo is engraved and/or embossed on the monolithic cover (7). Thereby, the manufacturing costs can be further reduced. In another version of the second embodiment, a shape of the monolithic door frame (5), the cover (7), and the aperture (6) is rectangular. The rectangular-shaped cover (7) is formed to overlap an inner side portion of the monolithic door frame (5) which surrounds the rectangular-shaped aperture (6). In another version of the second embodiment, a plurality of through holes (8) are formed on the cover (7). In addition, a plurality of protrusions (9) are formed on each of the upper section (3a) and the lower section (3b). The plurality of protrusions (9) are inserted into the through holes (8) to align and arrest the cover (6).

In a third embodiment, the upper section (3a), the lower section (3b), the left lateral section (3c), and the right lateral section (3d) are separately formed as a modular door frame (5) which has an aperture (6) (Figs. 1 and 2, Figs. 9 to 12). In this embodiment, the upper section (3a), the lower section (3b), the left lateral section (3c), and the right lateral section (3d) are each provided with an engagement portion (3g) for enabling a form-fitting assembly. In this embodiment, the body section (3e) is separately formed as a cover (7). The cover (7) is preferably a monolithic cover (7). The upper section (3a), the lower section (3b), the left lateral section (3c), and the right lateral section (3d) are assembled with each other to constitute the modular door frame (5). The modular door frame (5) and the cover (7) are assembled with each other to constitute the door body (2) by placing the cover (7) on an inner side of the door frame (5) to close the aperture (6). The foam material is poured onto a rear side of the cover (7) and into an inner side of the modular door frame (5). In this embodiment, the inner side of the modular door frame (5) and the cover (7) constitutes a structure which is void of any openings, slits and the like. Therefore, the liquid foam material poured onto a rear side of the cover (7) and into an inner side of the modular door frame (5) cannot leak to an outside. Consequently, a waste of foam material and/or a manufacturing error is prevented.

In a version of the third embodiment, the upper section (3a) and the lower section (3b) respectively have a U-shaped form. In this version of the third embodiment, the left lateral section (3c) and the right lateral section (3d) respectively have a straight-shaped form with a predetermined height. The height is determined by a size of the modular door frame (5) to be manufactured. In another version of the third embodiment, a modular door frame (5) with a different size is manufactured by using the same upper section (3a) and the same lower section (3b) but a different left lateral section (3c) and a different right lateral section (3d) which have a corresponding height. In another version of the third embodiment, the left lateral section (3c) and the right lateral section (3d) are respectively configured by profiles. Thereby, a manufacturing process of refrigerator door (1) which has a different size has been simplified by virtue of the modular structure. In the above versions of the third embodiment, the cover (7) has a size which covers an aperture (6) of the modular door frame (5) to be manufactured. In another version of the third embodiment, the engagement portions (3g) are respectively formed as slide portions. The upper section (3a) and the lower section (3b) are slidably engaged with the left lateral section (3c) and the right lateral section (3d) when assembling the modular door frame (5). Thereby, a refrigerator door (1) with a different size can be easily assembled. In another version of the third embodiment, the monolithic cover (7) is provided in form of a decorative panel. In this version of the third embodiment, the decorative panel is made of any suitable decorative material. In another version of the third embodiment, the decorative panel is configured by paper, a poster, a glass plate, a mirror plate, wood, or plastic. The decorative panel preferably has a pattern, texture and the like which appeals the customer. The foam material cured behind the decorative material strengthens the overall structure. In another version of the third embodiment, the front side of the monolithic cover (7) is slightly curved. In an alternative version of the third embodiment, the front side of monolithic cover (7) is substantially flat. In another version of the third embodiment, the modular door frame (5) is made from plastic. Thereby, the modular door frame (5) is rendered corrosion-free. Thus, the modular door frame (5) need not be painted. In addition, the modular door frame (5) is formed from a relatively durable plastic. Thereby, the modular door frame (5) is rendered less vulnerable to outer influences such as scratches. In another version of the third embodiment, the modular door frame (5) is formed from transparent plastic. In an alternative version of the third embodiment, the modular door frame (5) is formed from colored plastic. In another version of the third embodiment, a logo is engraved and/or embossed on the modular door frame (5). In an alternative version of the third embodiment, the logo is engraved and/or embossed on the monolithic cover (7). Thereby, the manufacturing costs can be further reduced. In another version of the third embodiment, a shape of the modular door frame (5), the cover (7), and the aperture (6) is rectangular. The rectangular-shaped cover (7) is formed to overlap an inner side portion of the modular door frame (5) which surrounds the rectangular-shaped aperture (6). In another version of the third embodiment, a plurality of through holes (8) are formed on the cover (7). In addition, a plurality of protrusions (9) are formed on each of the upper section (3a) and the lower section (3b). The plurality of protrusions (9) are inserted into the through holes (8) to align and arrest the cover (6).

In other versions of the first to third embodiment, a depression (10) is formed in the upper section (3a) (Figs. 1 to 12). The depression (10) serves as a handle for manipulating the refrigerator door (1). Thereby, any post manufacturing steps for mounting a handle to the door body (2) is dispensed with.

In other versions of the first to third embodiment, one or more than one recess portion (11) is formed in each of the upper section (3a) and the lower section (3b) (Figs. 1 to 12). The recess portion (11) is adapted to receive a corresponding door hinge for left-hand and/or right-hand swinging. Thereby, any post manufacturing steps of providing hinge receptacles are also dispensed with.

In other versions of the first to third embodiment, the door lining (4) is made from thermoplastic material. The door lining (4) is preferably provided with lugs for attaching storage bins for storing food.

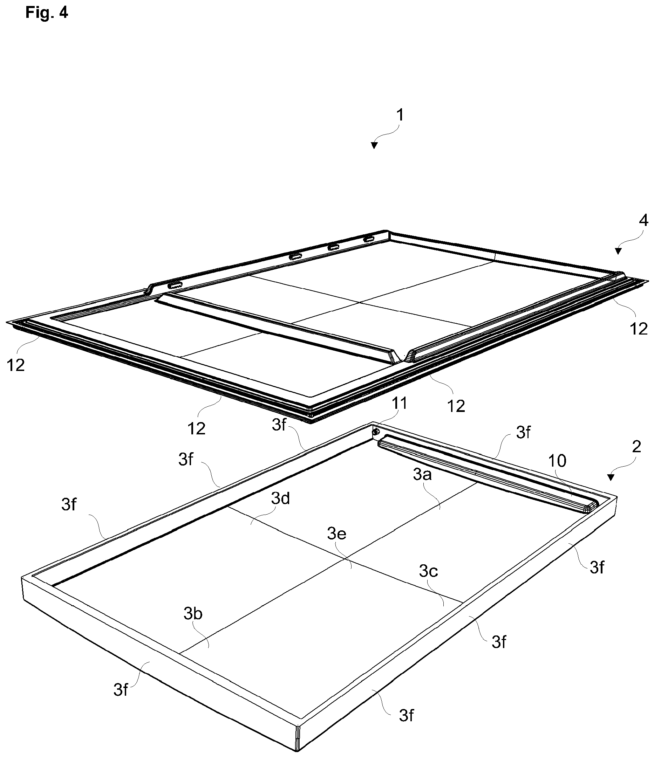

In other versions of the first to third embodiment, a flange (12) which form-fittingly matches both a front side and an inner side of the flange portions (3f) of the door body (2) is formed on the door lining (4) (Fig. 4, 6-8, 10-12). The door lining (4) is form-fittingly seated on the door body (2) and onto the curing foam material. Thereby, the foam material is securely prevented from leaking through the interface of the door body (2) and the door lining (4) to an outside.

The refrigerator (12) according to the present invention comprises a refrigerator door (1) as defined in any one of the above-described embodiments or their versions (Figs. 1 to 12).

By the method of the present invention, the number of pieces and process steps involved in the manufacturing and assembling of the refrigerator door (1) is reduced. By the method of the present invention, refrigerator doors (1) having different appearances and different sizes can be cost-effectively manufactured.

## Claims

1. A method of manufacturing a refrigerator door (1) comprising the steps of:
- providing a door body (2) which has an upper section (3a), a lower section (3b), a left lateral section (3c), a right lateral section (3d), and a body section (3e), wherein each of the upper section (3a), the lower section (3b), the left lateral section (3c), and the right lateral section (3d) has an outer flange portion (3f) which projects vertically away from an inner side of the door body (2) so as to enclose a space for retaining foam material,
- providing a door lining (4),
- pouring foam material into an inner side of the door body (2) and
- pressing the door lining (4) onto the foam material while it is curing to assemble the door lining (4) with the door body (2),
**characterized in that** the upper section (3a), the lower section (3b), the left lateral section (3c), the right lateral section (3d), and the outer flange portions (3f) are integrally formed as a monolithic door frame (5) which has an aperture (6) and the body section (3e) is separately formed as a monolithic cover (7), wherein the monolithic door frame (5) and the cover (7) are assembled with each other to constitute the door body (2) by placing the cover (7) on an inner side of the monolithic door frame (5) to close the aperture (6) and the foam material is poured onto a rear side of the cover (7) and into an inner side of the monolithic door frame (5).

2. The method according to claim 1, **characterized in that** the upper section (3a), the lower section (3b), the left lateral section (3c), and the right lateral section (3d) are separately formed to assemble a modular door frame (5) which has an aperture (6), wherein the upper section (3a), the lower section (3b), the left lateral section (3c), and the right lateral section (3d) are each provided with an engagement portion (3g) for form-fitting assembly and the body section (3e) is separately formed as a monolithic cover (7), wherein the upper section (3a), the lower section (3b), the left lateral section (3c), and the right lateral section (3d) are assembled with each other to constitute the modular door frame (5), the modular door frame (5) and the cover (7) are assembled with each other to constitute the door body (2) by placing the cover (7) on an inner side of the modular door frame (5) to close the aperture (6) and the foam material is poured onto a rear side of the cover (7) and into an inner side of the modular door frame (5).

3. The method according to claim 2, **characterized in that** the upper section (3a) and the lower section (3b) respectively have a U-shaped form and the left lateral section (3c) and the right lateral section (3d) respectively have a straight-shaped form with a predetermined height.

4. The method according to claim 2 or 3, **characterized in that** the engagement portions (3g) are respectively formed as slide portions, wherein the upper section (3a) and the lower section (3b) are slidably engaged with the left lateral section (3c) and the right lateral section (3d) to constitute the modular door frame (5).

5. The method according to any one of claims 1 to 4, **characterized in that** the cover (7) and the aperture (6) each has a rectangular shape, wherein the cover (7) is formed to overlap an inner side portion of the door frame (5) which surrounds the aperture (6).

6. The method according to any one of claims 1 to 5, **characterized in that** a plurality of through holes (8) are formed on the cover (7) and a plurality of protrusions (9) are formed on each of the upper section (3a) and the lower section (3b), wherein the plurality of protrusions (9) are inserted into the through holes (8) to align and arrest the cover (6).

7. The method according to any one of claims 1 to 6, **characterized in that** the door frame (5) is made from plastic and the cover (7) is made from plastic, paper, glass, or wood.

8. The method according to any of claims 1 to 7, **characterized in that** the door body (2) is made from plastic, and is formed to have a rectangular shape.

9. The method according to any of claims 1 to 8, **characterized in that** a depression (10) is formed in the upper section (3a), wherein the depression (10) defines a handle for manipulating the refrigerator door (1).

10. The method according to any of claims 1 to 9, **characterized in that** one or more than one recess portion (11) is formed in each of the upper section (3a) and the lower section (3b), wherein the recess portion (11) is suitable for receiving a corresponding door hinge for left-hand and/or right-hand swinging.

11. The method according to any of claims 1 to 10, **characterized in that** the door lining (4) is made from thermoplastic material.

12. The method according to any of claims 1 to 11, **characterized in that** a flange (12) which form-fittingly matches both a front side and an inner side of the flange portion (3f) of the door body (2) is formed on the door lining (4), wherein the door lining (4) is form-fittingly seated on the door body (2) and onto the curing foam material.

13. A refrigerator (12) comprising the refrigerator door (1) which is manufactured through the method as defined in any one of claims 1 to 12.

## Patentansprüche

1. Ein Verfahren zur Herstellung einer Kühlschranktür (1), umfassend die Schritte:
- Bereitstellen eines Türkörpers (2), der einen oberen Abschnitt (3a), einen unteren Abschnitt (3b), einen linken seitlichen Abschnitt (3c) und einen rechten seitlichen Abschnitt (3d), und einen Körperabschnitt (3e) aufweist, wobei jeder von dem oberen Abschnitt (3a), dem unteren Abschnitt (3b), dem linken seitlichen Abschnitt (3c) und dem rechten seitlichen Abschnitt (3d) ein äußeres Flanschteil (3f) aufweist, der vertikal von einer Innenseite des Türkörpers (2) wegragt, um einen Raum zum Zurückhalten von Schaummaterial zu umschließen,
- Bereitstellen einer Türverkleidung (4),
- Gießen von Schaummaterial in einer innere Seite des Türkörpers (2) und
- Drücken der Türverkleidungs (4) auf das Schaummaterial während des Aushärtens, um die Türverkleidung (4) mit dem Türkörper (2) zusammenzubauen,
**dadurch gekennzeichnet, dass** der obere Abschnitt (3a), der untere Abschnitt (3b), der linke seitliche Abschnitt (3c), der rechte seitliche Abschnitt (3d), und das äußere Flanschteil (3f) einstückig als einen monolithischen Türrahmen (5) ausgebildet ist, der eine Öffnung (6) aufweist und der Körperabschnitt (3e) separat als eine monolithische Abdeckung (7) ausgebildet ist, wobei, der monolithische Türrahmen (5) und die Abdeckung (7) miteinander zusammengebaut sind, um einen Türkörper (2) zu bilden, in dem eine Abdeckung (7) auf einer inneren Seite der monolithischen Türrahmen (5) zum Schließen der Öffnung (6) und das Schaummaterial auf eine Rückseite der Abdeckung (7) und in eine Innenseite des monolithischen Türrahmens (5) gegossen ist.

2. Verfahren nach Anspruch 1, **dadurch gekennzeichnet, dass** der obere Abschnitt (3a), der unteren Abschnitt (3b), der linke seitliche Abschnitt (3c), der rechte seitlichen Abschnitt (3d), separat ausgebildet sind, um eine modularen Türrahmen (5) der eine Öffnung (6) aufweist, einzubauen, wobei der obere Abschnitt (3a), der untere Abschnitt (3b), der linke seitliche Abschnitt (3c), der rechte seitliche Abschnitt (3d) jeweils mit einem Eingriffsabschnitt (3g) zur formschlüssigen Montage versehen sind und der Köperabschnitt (3e) separat als eine monolithische Abdeckung (7) ausgebildet ist, wobei der obere Abschnitt (3a), der untere Abschnitt (3b), der linke seitliche Abschnitt (3c) und der rechte seitliche Abschnitt (3d) miteinander zusammengebaut sind, um einen modularen Türrahmen (5) zu bilden, der modulare Türrahmen (5) und die Abdeckung (7) miteinander zusammengebaut sind, um den Türkörper (2) zu bilden, in dem die Abdeckung (7) an einer Innenseite des modularen Türrahmens (5) angeordnet wird, um die Öffnung (6) zu schließen, und das Schaummaterial auf eine Rückseite der Abdeckung (7) und in eine Innenseite des modularen Türrahmens (5) gegossen wird.

3. Verfahren nach Anspruch 2, **dadurch gekennzeichnet, dass** der obere Abschnitt (3a) und der untere Abschnitt (3b) jeweils in eine U-förmige Gestalt aufweisen und der linke seitliche Abschnitt (3c) und der rechte seitliche Abschnitt (3d) jeweils eine geradeförmige Gestalt mit einer vorbestimmten Höhe aufweisen.

4. Verfahren nach Anspruch 2 oder 3, **dadurch gekennzeichnet, dass** die Eingriffsabschnitte (3g) jeweils als Gleitabschnitte ausgebildet sind, wobei der obere Abschnitt (3a) und der untere Abschnitt (3b) mit dem linken seitlichen Abschnitt (3c) und der rechte seitliche Abschnitt (3d) gleitfähig in Eingriff steht, um den modularen Türrahmen (5) zu bilden.

5. Verfahren nach einem der Ansprüche 1 bis 4, **dadurch gekennzeichnet, dass** die Abdeckung (7) und die Öffnung (6) jeweils in eine rechteckige Gestalt aufweisen, wobei die Abdeckung (7) so ausgebildet ist, dass sie einen Innenseitenabschnitt des Türrahmens (5) überlappt, der die Öffnung (6) umgibt.

6. Verfahren nach einem der Ansprüche 1 bis 5, **dadurch gekennzeichnet, dass** eine Mehrzahl von Durchgangslöcher (8) an der Abdeckung (7) und eine Mehrzahl von Vorsprüngen (9) an jedem der oberen Abschnitte (3a) und der unteren Abschnitte (3b) ausgebildet sind, wobei die Mehrzahl von Vorsprüngen (9) in die Durchgangslöcher (8) eingeführt werden, um die Abdeckung (6) auszurichten und zu arrestieren.

7. Verfahren nach einem der Ansprüche 1 bis 6, **dadurch gekennzeichnet, dass** der Türrahmen (5) aus Kunststoff und die Abdeckung (7) aus Kunststoff, Papier, Glas oder Holz hergestellt ist.

8. Verfahren nach einem der Ansprüche 1 bis 7, **dadurch gekennzeichnet, dass** der Türkörper (2) aus Kunststoff hergestellt ist und so ausgebildet ist, um eine rechteckige Gestalt zu haben.

9. Verfahren nach einem der Ansprüche 1 bis 8, **dadurch gekennzeichnet, dass** eine Vertiefung (10) in dem oberen Abschnitt (3a) ausgebildet ist, wobei die Vertiefung (10) einen Griff zum Manipulation der Kühlschranktür (1) definiert.

10. Verfahren nach einem der Ansprüche 1 bis 9, **dadurch gekennzeichnet, dass** mehr als ein Aussparungsteil (11) jeweils im oberen Abschnitt (3a) und im unteren Abschnitt (3b) ausgebildet ist, wobei der Aussparungsteil (11) zur Aufnahme eines entsprechenden Türscharniers zum rechten oder linken Aufschlag geeignet ist.

11. Verfahren nach einem der Ansprüche 1 bis 10, **dadurch gekennzeichnet, dass** die Türverkleidung (4) aus thermoplastischem Material besteht.

12. Verfahren nach einem der Ansprüche 1 bis 11, **dadurch gekennzeichnet, dass** ein Flansch (12), der sowohl an einer Vorderseite und an einer Innenseite des Flanschabschnitts (3f) des Türkörpers (2) formschlüssig an der Türverkleidung (4) ausgebildet ist, wobei die Türverkleidung (4) formschlüssig auf dem Türkörper (2) und auf dem aushärtenden Schaummaterial eingesetzt ist.

13. Ein Kühlschrank (12) mit der Kühlschranktür (1), die durch das Verfahren nach einem der Ansprüche 1 bis 12 hergestellt ist.

## Revendications

1. Procédé de fabrication d'une porte de réfrigérateur (1) comprenant les étapes de:
- fournir un corps de porte (2) qui a une section supérieure (3a), une section inférieure (3b), une section latérale gauche (3c), une section latérale droite (3d) et une section de corps (3e), dans lequel chacun de la section supérieure (3a), de la section inférieure (3b), de la section latérale gauche (3c), et la section latérale droite (3d) comporte une partie bride extérieure (3f) qui dépasse verticalement d'un côté intérieur du corps de porte (2) de manière à entourer un espace pour retenir le matériau en mousse,
- fournir un revêtement de porte (4),
- verseur de la mousse dans un côté interne du corps de porte (2) et
- presser le revêtement de porte (4) sur le matériau en mousse pendant le durcissement pour assembler le revêtement de porte (4) avec le corps de porte (2),
**caractérisé en ce que** la section supérieure (3a), la section inférieure (3b), la section latérale gauche (3c), la section latérale droite (3d) et la partie bride extérieure (3f) sont formées intégralement comme encadrement de porte monolithique (5) qui présente une ouverture (6) et la section de corps (3e) est formée séparément comme une couverture monolithique (7), dans lequel l'encadrement de porte monolithique (5) et le couvercle (7) sont assemblés pour constituer le corps de porte (2) en plaçant le couvercle (7) sur un côté intérieur de l'encadrement de porte monolithique (5) pour fermer l'ouverture (6) et le matériau en mousse est versé sur un côté arrière du couvercle (7) et dans un côté interne de l'encadrement de porte monolithique (5).

2. Procédé selon la revendication 1, **caractérisé en ce que** la section supérieure (3a), la section inférieure (3b), la section latérale gauche (3c) et la section latérale droite (3d) sont formées séparément pour assembler un encadrement de porte modulaire (5) qui a une ouverture (6), dans lequel la section supérieure (3a), la section inférieure (3b), la section latérale gauche (3c) et la section latérale droite (3d) sont chacune munies d'une partie d'engagement (3g) pour l'assemblage de forme et la section de corps (3e) est formé séparément comme une couverture monolithique (7), dans lequel la section supérieure (3a), la section inférieure (3b), la section latérale gauche (3c) et la section latérale droite (3d) sont assemblées l'une avec l'autre pour constituer l'encadrement de porte modulaire (5), l'encadrement de porte modulaire (5) et le couvercle (7) sont assemblés pour constituer le corps de porte (2) en plaçant le couvercle (7) sur un côté intérieur de l'encadrement de porte modulaire (5) pour fermer l'ouverture (6) et le matériau en mousse est versé sur un côté arrière du couvercle (7) et dans un côté interne de l'encadrement de porte modulaire (5).

3. Procédé selon la revendication 2, **caractérisé en ce que** la section supérieure (3a) et la section inférieure (3b) ont respectivement une forme en U et la section latérale gauche (3c) et la section latérale droite (3d) ont respectivement une ligne droite forme en forme avec une hauteur prédéterminée.

4. Procédé selon les revendications 2 ou 3, **caractérisé en ce que** les parties d'engagement (3 g) sont respectivement formées comme des parties coulissantes, dans lequel la partie supérieure (3a) et la section inférieure (3b) sont engagées de manière coulissante avec la section latérale gauche (3c) et la section latérale droite (3d) pour constituer l'encadrement de porte modulaire (5).

5. Procédé selon l'une quelconque des revendications 1 à 4, **caractérisé en ce que** le couvercle (7) et l'ouverture (6) ont chacun une forme rectangulaire, le couvercle (7) étant formé pour chevaucher une partie latérale intérieure du cadre de porte (5) qui entoure l'ouverture (6).

6. Procédé selon l'une quelconque des revendications 1 à 5, **caractérisé en ce que** plusieurs trous traversants (8) sont formés sur le couvercle (7) et une pluralité de saillies (9) sont formées sur chacune des sections supérieures (3a) et la section inférieure (3b), dans laquelle la pluralité de saillie (9) est insérée dans les trous traversants (8) pour aligner et arrêter le couvercle (6).

7. Procédé selon l'une quelconque des revendications 1 à 6, **caractérisé en ce que** l'encadrement de porte (5) est en matière plastique et le couvercle (7) est en matière plastique, en papier, en verre ou en bois.

8. Procédé selon l'une quelconque des revendications 1 à 7, **caractérisé en ce que** le corps de porte (2) est en matière plastique et a une forme rectangulaire.

9. Procédé selon l'une quelconque des revendications 1 à 8, **caractérisé en ce qu'**une dépression (10) est formée dans la section supérieure (3a), dans laquelle la dépression (10) définit une poignée pour manipuler la porte du réfrigérateur (1).

10. Procédé selon l'une quelconque des revendications 1 à 9, **caractérisé en ce qu'**une ou plusieurs parties en creux (11) sont formées dans chacune des sections supérieure (3a) et inférieure (3b), dans laquelle la partie évidée (11) est adapté pour recevoir une charnière de porte correspondante pour un basculement à gauche et / ou à droite.

11. Procédé selon l'une quelconque des revendications 1 à 10, **caractérisé en ce que** le revêtement de porte (4) est en matière thermoplastique.

12. Procédé selon l'une quelconque des revendications 1 à 11, **caractérisé en ce qu'**une bride (12) qui s'adapte parfaitement à la fois à un côté avant et à un côté interne de la partie bride (3f) du corps de porte (2) est formée sur le revêtement de porte (4), dans laquelle le revêtement de porte (4) est logée de manière ajustée sur le corps de porte (2) et sur le matériau en mousse durcissable.

13. Réfrigérateur (12) comprenant la porte de réfrigérateur (1) qui est fabriquée par le procédé selon l'une quelconque des revendications 1 à 12.
